# EUROPÄISCHE PATENTSCHRIFT

(11) **EP 3 747 649 B1**
(45) Veröffentlichungstag und Bekanntmachung des Hinweises auf die Patenterteilung: **20.09.2023**
(21) Anmeldenummer: 20153541.6
(22) Anmeldetag: 24.01.2020
(51) Int. Cl.: B32B 19/02, B24D 3/28, B24D 11/00, B32B 19/04, B32B 27/08, B32B 27/14, B32B 27/20, B32B 27/28, B32B 27/30, B32B 27/32, B32B 27/34, B32B 27/40, B32B 33/00

(54) **FLACHMATERIAL MIT KÖRNIGER OBERSCHICHT**
FLAT MATERIAL WITH GRANULAR TOP LAYER
MATIÈRE PLANE POURVUE DE COUCHE SUPÉRIEURE GRANULEUSE

(30) Priorität: 03.06.2019 DE 102019003836
(43) Veröffentlichungstag der Anmeldung: 09.12.2020
(73) Patentinhaber: K.L. Kaschier- und Laminier GmbH, 48455 Bad Bentheim-Gildehaus (DE)
(72) Erfinder: Kischa, Lars, 51674 Wiehl (DE); Schulze Wehninck, Rembert, 82327 Tutzing (DE)
(74) Vertreter: Cohausz Hannig Borkowski Wißgott

(56) Entgegenhaltungen:
- US-A1- 2004 247 852

## Beschreibung

Die Erfindung betrifft ein Schleifmittel in Form eines Flachmaterials mit einem flachen Trägermaterial, auf dessen Oberseite eine körnige Schicht befestigt ist. Es ist bekannt, Schmirgelpapier herzustellen, indem Papier mit Quarzkörnern beschichtet wird, wobei die Quarzkörner in einer Kleberschicht Halt finden.

US 2004/247852 A1 offenbart ein Schleifmittel bestehend aus einer Schicht aus Polyurethan, worin Schleifpartikel wie Siliziumdioxid, welches Quarzsand entspricht, welcher überwiegend aus Siliziumdioxid besteht, enthalten sind. Zudem offenbart D1 an der Basis der Polyurethan-Schicht ein Trägermaterial aus einer Folienschicht.

Aufgabe der Erfindung ist es, ein Schleifmittel-Flachmaterial der eingangs genannten Art zu schaffen, das bei geringem Herstellungsaufwand und hoher Lebensdauer verschiedenste Anwendungen ermöglicht.

Diese Aufgabe wird erfindungsgemäß dadurch gelöst, dass auf der Oberseite des Trägermaterials eine Schicht aus Polyurethan angeordnet ist, in der die Körner der körnigen Schicht eingebettet sind und dass das flache Trägermaterial aus Polyvinylchlorid (PVC), Polyethersulfon (PES), Polypropylen (PP), Polyamid (PA), Polyethylen (PE), Polyurethan (PUR) oder deren Mischungen besteht.

Ein solches Flachmaterial weist eine hohe Lebensdauer auf und ist besonders vorteilhaft als Schleifmittel verwendbar. Bei geringem Herstellungsaufwand ermöglicht es verschiedenste Anwendungen und ist sofort einsetzbar. Es benötigt keine zusätzlichen Bindersysteme.

Eine hohe Stabilität und Haltbarkeit bei geringer Bauhöhe wird erreicht, wenn das flache Trägermaterial eine Folie oder Membran aus Kunststoff ist.

Eine einfache und kurzzeitige Herstellung bei hoher Festigkeit der Körner auf dem Trägermaterial wird erreicht, wenn die Schicht aus Polyurethan auf das flache Trägermaterial heiß aufgetragen insbesondere aufgeschmolzen ist. Vorzugsweise sind die Körner der körnigen Schicht von Quarzsand oder körnigem Bimsstein gebildet. Hierbei haben die Körner der körnigen Schicht eine Korngröße von 0,07 bis 2 mm.

Eine optimale Bindung der Körner auf dem Trägermaterial wird erreicht, wenn die Schicht aus Polyurethan ein Gewicht von 20 g/m² bis 300 g/m² aufweist.

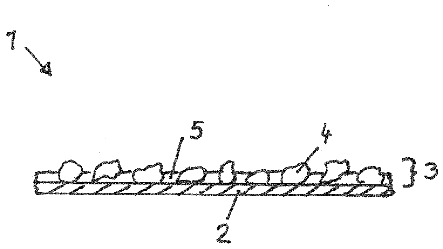

Ein Ausführungsbeispiel der Erfindung ist in der Zeichnung in einem Querschnitt dargestellt und wird im Folgenden näher beschrieben.

Das erfindungsgemäße Flachmaterial 1 ist ein Schleifmittel und weist ein flaches Trägermaterial 2 in Form einer Folie oder Membran aus Kunststoff auf. Als Kunststoff wird Polyvinylchlorid (PVC), Polyethersulfon (PES), Polypropylen (PP), Polyamid (PA), Polyethylen (PE), Polyurethan (PUR) oder deren Mischungen gewählt.

Auf das flache Trägermaterial 2 wird eine dünne Schicht 5 aus Polyurethan heiß aufgetragen insbesondere aufgeschmolzen, deren Dicke gleich oder geringer ist als die Dicke des Flachmaterials 2 und geringer ist als die durchschnittliche Dicke der Körner 4, die nach dem Auftragen der Polyurethanschicht 5 auf diese gestreut und insbesondere gewalzt werden, solange das Polyurethan noch flüssig oder zähflüssig ist, so dass die Körner in das Polyurethan eindringen können und von dem Polyurethan gehalten werden. Hierbei ist dafür gesorgt, dass zumindest die meisten Körner 4 über die Oberfläche der Polyurethanschicht mit einem Großteil ihres Körpers nach oben herausragen. Hierbei weist die Schicht aus Polyurethan 5 ein Gewicht von 20 g/m² bis 300 g/m² auf.

Als Körner 4 werden für die körnige Schicht 3 vorzugsweise Quarzsand oder körniger Bimsstein verwendet. Hierbei haben die Körner 4 der körnigen Schicht 3 eine Korngröße von 0,07 bis 2 mm.

## Patentansprüche

1. Schleifmittel in Form eines Flachmaterials mit einem flachen Trägermaterial (2), auf dessen Oberseite eine körnige Schicht (3) befestigt ist, **dadurch gekennzeichnet, dass** auf der Oberseite des Trägermaterials (2) eine Schicht aus Polyurethan (5) angeordnet ist, in der die Körner (4) der körnigen Schicht (3) eingebettet sind, und dass das flache Trägermaterial (2) aus Polyvinylchlorid (PVC), Polyethersulfon (PES), Polypropylen (PP), Polyamid (PA), Polyethylen (PE), Polyurethan (PUR) oder deren Mischungen besteht.

2. Schleifmittel nach Anspruch 1, **dadurch gekennzeichnet, dass** das flache Trägermaterial (2) eine Folie oder Membran aus Kunststoff ist.

3. Schleifmittel nach Anspruch 1 oder 2, **dadurch gekennzeichnet, dass** die Schicht aus Polyurethan (5) auf das flache Trägermaterial (2) heiß aufgetragen insbesondere aufgeschmolzen ist.

4. Schleifmittel nach einem der vorherigen Ansprüche, **dadurch gekennzeichnet, dass** die Körner (4) der körnigen Schicht (3) von Quarzsand oder körnigem Bimsstein gebildet sind.

5. Schleifmittel nach einem der vorherigen Ansprüche, **dadurch gekennzeichnet, dass** die Körner (4) der körnigen Schicht (3) eine Korngröße von 0,07 bis 2 mm haben.

6. Schleifmittel nach einem der vorherigen Ansprüche, **dadurch gekennzeichnet, dass** die Schicht aus Polyurethan (5) ein Gewicht von 20 g/m² bis 300 g/m² aufweist.

## Claims

1. Abrasive means in the form of a flat material with a flat carrier material (2), on the upper side of which a granular layer (3) is fixed, **characterized in that** a layer of polyurethane (5) is arranged on the upper side of the carrier material (2), in which the grains (4) of the granular layer (3) are embedded, and that the flat carrier material (2) consists of polyvinyl chloride (PVC), polyethersulfone (PES), polypropylene (PP), polyamide (PA), polyethylene (PE), polyurethane (PUR) or mixtures thereof.

2. Abrasive means according to claim 1, **characterized in that** the flat carrier material (2) is a film or membrane made of plastic.

3. Abrasive means according to claim 1 or 2, **characterized in that** the layer of polyurethane (5) is hot-applied, in particular melted, onto the flat carrier material (2).

4. Abrasive means according to any one of the preceding claims, **characterized in that** the grains (4) of the granular layer (3) are formed by quartz sand or granular pumice.

5. Abrasive means according to any one of the preceding claims, **characterized in that** the grains (4) of the granular layer (3) have a grain size of 0.07 to 2 mm.

6. Abrasive means according to any one of the preceding claims, **characterized in that** the layer of polyurethane (5) has a weight of 20 g/m² to 300 g/m².

## Revendications

1. Moyen abrasif sous la forme d'un matériau plat avec un matériau support plat (2), sur la face supérieure duquel est fixée une couche granulaire (3), **caractérisé en ce qu'**une couche de polyuréthane (5) est disposée sur la face supérieure du matériau support (2), dans laquelle les grains (4) de la couche granulaire (3) sont noyés, et **en ce que** le matériau support plat (2) est constitué de chlorure de polyvinyle (PVC), de polyéthersulfone (PES), de polypropylène (PP), de polyamide (PA), de polyéthylène (PE), de polyuréthane (PUR) ou de leurs mélanges.

2. Moyen abrasif selon la revendication 1, **caractérisé en ce que** le matériau support plat (2) est une feuille ou une membrane en matière plastique.

3. Moyen abrasif selon la revendication 1 ou 2, **caractérisé en ce que** la couche de polyuréthane (5) est appliquée à chaud, en particulier par fusion, sur le matériau support plat (2).

4. Moyen abrasif selon l'une quelconque des revendications précédentes, **caractérisé en ce que** les grains (4) de la couche granulaire (3) sont constitués de sable siliceux ou de pierre ponce granulaire.

5. Moyen abrasif selon l'une quelconque des revendications précédentes, **caractérisé en ce que** les grains (4) de la couche granulaire (3) ont une granulométrie de 0,07 à 2 mm.

6. Moyen abrasif selon l'une quelconque des revendications précédentes, **caractérisé en ce que** la couche de polyuréthane (5) a un poids de 20 g/m² à 300 g/m².
